# EUROPÄISCHE PATENTSCHRIFT

(11) **EP 1 606 918 B1**
(45) Veröffentlichungstag und Bekanntmachung des Hinweises auf die Patenterteilung: **28.11.2007**
(21) Anmeldenummer: 04712541.4
(22) Anmeldetag: 19.02.2004
(51) Int. Cl.: H04L 29/06, H04L 12/64, H04L 12/66, H04M 3/493

(54) **VERFAHREN UND VORRICHTUNG ZUR BEREITSTELLUNG UND EFFIZIENTEN NUTZUNG VON RESSOURCEN FÜR DAS ERZEUGEN UND AUSGEBEN VON INFORMATIONEN IN PAKETBASIERTEN NETZEN**
METHOD AND DEVICE FOR THE PROVISION AND EFFICIENT UTILISATION OF RESOURCES FOR GENERATING AND OUTPUTTING INFORMATION IN PACKET-ORIENTED NETWORKS
PROCEDE ET DISPOSITIF DE MISE A DISPOSITION ET D'UTILISATION EFFICACE DE RESSOURCES POUR PRODUIRE ET SORTIR DES INFORMATIONS DANS DES RESEAUX ORIENTES PAQUETS

(30) Priorität: 21.03.2003 DE 10312739
(43) Veröffentlichungstag der Anmeldung: 21.12.2005
(73) Patentinhaber: SIEMENS AKTIENGESELLSCHAFT, 80333 München (DE)
(72) Erfinder: FRANZ, Mathias, 10178 Berlin (DE); FREUND, Detlev, 10707 Berlin (DE); LÖBIG, Norbert, 64291 Darmstadt (DE); SCHÖPF, Johannes, 82256 Fürstenfeldbruck (DE)
(86) Internationale Anmeldenummer: PCT/EP2004/001621
(87) Internationale Veröffentlichungsnummer: WO 2004/084518

(56) Entgegenhaltungen:
- EP-A- 1 041 801
- EP-A- 1 156 649
- US-A1- 2001 005 382

## Beschreibung

Die Erfindung betrifft ein Verfahren und eine Vorrichtung zur Erzeugung einer über ein paketorientiertes Netz zu übertragenden Informationsausgabe.

Der Erfindungsgegenstand umfasst Aspekte der Kommunikationsnetze, der Vermittlungstechnik und der Internettechnologien.

Das derzeit wohl wichtigste Feld für Entwicklung auf dem Gebiet der Netze ist die Übertragung von Echtzeitverkehr, z.B. von Sprach- und Videoinformationen, über paketorientierte Netze und die Bereitstellung von den aus den klassischen Telephonnetzen - auch als PSTN (public switched telephone network) Netze oder TDM (time division multiplexing) Netze bezeichnet - bekannten Diensten oder Leistungsmerkmalen im paketorientierten Netz, z.B. IP (Internet Protocol) Netz.

Ein wichtiger Dienst ist das Spielen von Ansagen, die in gewissen Situationen abgespielt werden (z.B. 'Kein Anschluss unter dieser Nummer', 'Die Rufnummer hat sich geändert, die neue Rufnummer ist 722-25940', Warteschleifenansagen oder die Ansage der entgangenen Anrufe.) In dem klassischen Fall, in dem der Nutzkanal der Verbindung in die Vermittlungsstelle hineingeführt wird, können diese Ansagen von mit entsprechender Funktionalität ausgerüsteten peripheren Einrichtungen der Vermittlungsstelle oder auch von über TDM/PCM-Technik an die Vermittlungsstelle angeschlossenen vermittlungsstellenexternen Einrichtungen bereitgestellt werden. Werden die Nutzdaten jedoch außerhalb der Vermittlungsstelle in einem Paketnetz geführt, so wird hierzu vorzugsweise ein externes System genutzt. Dieses besitzt Schnittstellen zum Paketnetz für die aus Ansagen bestehenden Nutzdaten. Ferner besitzt das externe Ansagesystem eine logische Steuerschnittstelle zu der für die Steuerung von außerhalb der Vermittlungsstelle geführten Verbindungen im Paketnetz tätigen Vermittlungsstelle. Die Steuerung der Ansagefunktionalität des externen Systems durch die Vermittlungsstelle erfolgt beispielsweise mittels des Media Gateway Kontroll-Protokolls, das mit MGCP (media gateway control protocol) abgekürzt wird. Die Ansagefunktion kann in einem eigenen Netzelement oder integriert in einem aus anderen Gründen vorhandenen Netzelement, z. B. einem Media Gateway bereitgestellt werden.

Die Druckschrift US 2001 /0 005 382 die als nächster stand der Technik angesehen wird, zeigt das o.g. system.

Da gewisse Ansagen sehr häufig gebraucht werden, stellt man diese in TDM-basierten Vermittlungsstellen kosteneffizient über Broadcast-Funktionalität zur Verfügung. Erzeugte Sprachansagen werden über das in einer TDM-basierten Vermittlungsstelle vorhandene Koppelnetz an eine Mehrzahl von Teilnehmer verteilt. Durch zeitgesteuertes Durchschalten in den peripheren Einrichtungen kann man sogar das Aufschalten in eine laufende Ansage unterbinden, so dass der Teilnehmer den Eindruck hat, die mit ihrem Anfang beginnende Ansage individuell gespielt zu bekommen.

In paketbasierten Netzen steht eine dem Broadcasting entsprechende, die Kosten der Ansagetechnik reduzierende Funktionalität nicht im gleichen Maße zur Verfügung. Gründe sind nicht durchgängige Verfügbarkeit von Multicast Routing unter Realzeitanforderungen vermittlungstechnischer Abläufe sowie entsprechender Signalisierungsstandards im paketbasierten Netz, mangelnde Verfügbarkeit dieser Signalisierungsunterstützung in der steuernden Vermittlungsstelle - die im folgenden zur Unterscheidung von Vermittlungsstellen des klassischen Telephonienetzes als paketbasierte Vermittlungsstelle bezeichnet wird -, sehr kurze Haltedauern von Standardansagen, problematische Steuerung des zeitgerechten Aufschaltens auf den Anfang der Ansage im Endpunkt und Schwierigkeiten bezüglich der Standardkonformität zu RTP/RTCP (RTP: real time protocol; RTCP: real time control protocol) in IP-basierten Netzen. Dies führt dazu, dass auch Massenansagen aus Gründen der Einfachheit und Zuverlässigkeit paketbasiert als Einzelansagen bedient werden müssen. Dennoch soll die von TDM-basierten Netzen bekannte Kosteneffizienz erreicht werden.

Ein weiteres Problem besteht in der Notwendigkeit des Ausspielens sog. individueller Ansagen, bei denen ein Teil der Ansage dynamisch bestimmt ist. (Beispiele hierfür sind die Ansage der geänderten Rufnummer oder die Zeitansage.) Derartige Ansagen bestehen aus einer Folge von sog. Sprachfragmenten, die nach gewissen vordefinierten Regeln und in Abhängigkeit von dem individuellen Inhalt und den geforderten Landessprachen als konkatinierte Sequenz ausgespielt werden.

Zur Optimierung der Übertragungsbandbreite wird in paketbasierten Netzen ferner eine Reihe von sehr unterschiedlichen Kodierverfahren (z.B. G.711, G.726, G.728, G.729/G729A, G723.1 und G.723) für die Sprache unterstützt. Die diese Kodierverfahren unterstützenden HW/SW-Einrichtungen und -Funktionen werden in der Fachliteratur als Codec (Kodierer/Dekodierer) bezeichnet. Abhängig von den Fähigkeiten der Endpunkte einer Verbindung wird der zu verwendende Codec bzw. das zu verwendende Kodierverfahren nach Prioritätsgesichtspunkten im Rahmen des Verbindungsaufbaus ausgewählt (man spricht in diesem Zusammenhang von Codec Negotiation). Ist eine Ansagemaschine Endpunkt einer Verbindung, so sollte sie die im Netz durch die Endpunkte bzw. Endgeräte bevorzugten Kodierverfahren möglichst alle unterstützen und somit ihre Ansagen in allen von den Endpunkten gewünschten bzw. bevorzugten Kodierungen parallel und verbindungsindividuell bereitstellen können.

Die Erfindung hat zur Aufgabe die effiziente Bereitstellung von automatisierter Sprachausgabe in paketbasierten Netzen.

Die Aufgabe wird durch ein Verfahren nach Anspruch 1 und eine Vorrichtung nach Anspruch 18 gelöst.

Erfindungsgemäß werden vorkodierte Informationsausgaben-Bestandteile - im folgenden auch als Informationsfragmente bezeichnet - in einem Speichersystem bzw. Speichermodul bereitgestellt. Der Begriff Informationsausgaben-Bestandteil bzw. Informationsfragment soll dabei Audio- und Video-Informationen umfassen. Audio-Informationen sind dabei nicht auf Sprache im engeren Sinn gegrenzt. Z.B. können Informationsausgaben-Bestandteile auch beliebige Geräusche, Töne oder Musiksequenzen kodieren. Informationsfragmente können z.B. aus Tonaufnahmen bzw. Videosequenzen durch Schneidemaßnahmen oder über Sprachsynthese aus Texten erzeugt werden. Eine Informationsausgabe kann dabei nur Audio-Informationen, nur Video-Informationen oder beides umfassen. Bei den weiter unten erwähnten Kodierverfahren kann es sich sowohl um Kodierverfahren für Audio-Informationen als auch um Kodierverfahren für Video-Informationen handeln.

Das Speichersystem stellt eine Speicherfunktion bzw. content function für Informationsausgabe zur Verfügung. Ein Informationsausgabesystem oder Ansagensystem kann auf die in dem Speichersystem vorgehaltenen kodierten Informationsfragmente für die Bildung von Informationsausgaben zugreifen. Das Informationsausgabensystem oder Informationsausgabenmodul stellt eine Sprachfunktion (voice function) bzw. eine Videoausgabefunktion zur Verfügung, mit Hilfe derer Sprach- bzw. Videoinformationen für die Übertragung über ein paketbasiertes Netz ausgebracht werden können. Erfindungsgemäß besteht eine funktionale Trennung zwischen der Speicherung von vorkodierten InformationsausgabenBestandteilen und der Zusammensetzung und Ausgabe von Informationsausgaben in dem Informationsausgabesystem. Den beiden Funktionen zugehörigen Module bzw. Systeme, das Speichersystem und das Informationsausgabesystem, können räumlich getrennt oder auf einer gemeinsamen Hardware realisiert sein. Zur Kommunikation zwischen den beiden Systemen bzw. bei der Übertragung von vorkodierten Informationsfragmenten wird eine genormte Schnittstelle, beispielsweise HTTP-basiert (http: hypertext transfer protocol) verwendet. Erfindungsgemäß greift das Informationsausgabesystem für eine Informationsausgabe auf im Speichersystem vorgehaltene Informationsausgaben-Bestandteile zu. Bei der Signalisierung einer Anforderung für eine Informationsausgabe an das Informationsausgabesystem - üblicherweise durch eine paketbasierte Vermittlungsstelle oder durch einen Call Control Server - wird dem Informationsausgabesystem ein bei der Informationsausgabe bevorzugt zu verwendendes Kodierverfahren mitgeteilt. Die Prioritätsliste der unterstützten Kodierverfahren wurde beispielsweise im Rahmen einer Codec-Negotiation zwischen dem Endgerät des Teilnehmers oder einer Netzzugangseinrichtung, die Funktionen für eine Nutzdatenanpassung zur Übertragung von Nutzdaten über das paketorientierte Netz bereitstellt, und der paketbasierten Vermittlungsstelle ausgetauscht und von der paketbasierten Vermittlungsstelle an das Informationsausgabesystem weitergeleitet. Basis für eine derartige Codec-Negotiation sind für eine Verbindung die von den Endpunkten am paketbasierten Netz unterstützten Kodierverfahren. Nach Erhalt der Anforderung für eine Informationsausgabe, im Rahmen derer das bevorzugt zu verwendende Kodierverfahren mitgeteilt wird, fordert das Informationsausgabesystem bei dem Speichersystem mit dem bezeichneten Kodierverfahren kodierte Informationsausgaben-Bestandteile an. Dies ist eine Konstellation, bei der die Codec-Negotiation nicht zwischen zwei Endgeräten am paketorientierten Netz, sondern zwischen einem Endgerät oder einem Endpunkt am paketbasierten Netz und dem Sprachausgabesystem erfolgt unter Steuerung der paketbasierten Vermittlungsstelle oder eines Call Control Servers. Die vom Speichersystem angeforderten Informationsausgaben-Bestandteile werden zu dem Informationsausgabesystem übertragen und für die Bildung der Informationsausgabe verwendet. Sie können dann im Informationsausgabesystem für weitere Verwendungen abgespeichert werden.

Die Verwendung vorkodierter Fragmente stellt einen Effizienzgewinn im Vergleich zu Verfahren dar, bei denen im Zuge der Informationsausgabenanforderung die Kodierung erst vorgenommen wird. Die Rechen- bzw. CPU-Last des Informationsausgabesystems wird reduziert, wodurch die Anzahl der parallel bearbeitbaren Informationsausgabe-Anforderungen steigt. Die funktionale Trennung von Informationsausgabe und Speicherung der vorkodierten Fragmente erlaubt so eine effiziente Ressourcenausnutzung und bedingt eine gute Skalierbarkeit. Denn auf die von dem Speichersystem bereitgestellten Informationsfragmente kann von einer Mehrzahl von Informationsausgabesystemen bzw. Informationsausgabemodulen zugegriffen werden. Eine Skalierung hin zu einer größeren Kapazität kann durch Einsatz einer Mehrzahl der Systemkomponenten bzw. Systemmodule vorgenommen werden, d.h. durch Bereitstellung einer Vielzahl von Informationsausgabesystemen bzw. Speichersystemen.

Gemäß einer vorteilhaften Weiterbildung stellt das Informationsausgabesystem zudem Bildungsregeln bzw. Bildungsvorschriften für Informationsausgaben bereit. Diese Bildungsregeln werden von dem Informationsausgabesystem entsprechend dem jeweiligen angeforderten Dienst referenziert und von dem Speichersystem abgerufen. Die Bildungsregeln werden benützt, um aus Informationsfragmenten die angeforderte Informationsausgabe zusammenzusetzen. Bildungsregeln bzw. Bildungsvorschriften umfassen beispielsweise mit XML (Extended mark up language) geschriebene Code-Bestandteile. An das Informationsausgabesystem übertragene Bildungsvorschriften können für die Verwendung bei weiteren gleichartigen Dienstanforderungen abgespeichert werden.

Abgespeicherte Fragmente bzw. Bildungsvorschriften können mit einer Lebensdauer bzw. einem Timer versehen werden. Wenn innerhalb dieser Lebensdauer ein Fragment bzw. eine Bildungsvorschrift nicht für eine Informationsausgabe verwendet wird, wird es gelöscht, falls man beispielsweise den Speicherplatzbedarf im Informationsausgabesystem optimieren möchte. Ebenfalls können Fragmente und/oder Bildungsvorschriften mit Erreichen einer maximalen Lebensdauer unbedingt gelöscht werden z. B. aus Gründen der Aktualität der Ausgaben.

Es ist sinnvoll, möglichst viele bei der Informationsausgabe verwendete Informationsausgaben-Bestandteile in vorkodierter Form vorzuhalten, um so das aufwändige Kodieren während der Bearbeitung der Anfrage zu vermeiden. Die vorkodierten Fragmente können auch mit während der Bearbeitung einer Anforderung für eine Informationsausgabe erzeugten Informationsfragmenten zu einer Informationsausgabe zusammengesetzt werden. Es ist z.B. denkbar, dass individualisierte Informationsausgabenbestandteile, wie z.B. im Rahmen der Anforderung abgefragte Telefonnummern oder andere Informationen, während der Bearbeitung erzeugt werden. Die Erzeugung dieser individualisierten Informationsausgabenbestandteile geschieht beispielsweise mittels Umwandlung von Text zu Sprache, wobei der erzeugte Informationsausgabenbestandteil mit dem für die Informationsausgabe verwendeten Kodierverfahren kodiert wird. Die Erzeugung von Informationsausgabestandteilen bzw. Informationsfragmenten während der Bearbeitung von Anforderungen wird erfindungsgemäß jedoch auf eine Mindestmaß reduziert, vorzugsweise ganz vermieden. Durch die Minimierung des Aufwandes hinsichtlich der Kodierung während der Bearbeitung von Anforderungen für eine Informationsausgabe wird der Einsatz der zur Verfügung stehenden Rechenleistung optimiert.

Die Informationsausgaben-Bestandteile und die Bildungsvorschriften können in dem Speichersystem erzeugt werden. In einer bevorzugten Lösung werden jedoch die Informationsausgaben-Bestandteile bzw. die Bildungsvorschriften in einem separaten Modul generiert, das hier als Informationsausgabengestaltungssystem bezeichnet wird und beispielsweise bei dem Netzmanagement des Netzbetreibers angesiedelt sein kann oder eventuell sogar nur beim Hersteller/Netzausrüster vorhanden ist. Vorzugsweise stellt ein Informationsausgabengestaltungssystem Informationsausgaben-Bestandteile bzw. Bildungsvorschriften für eine Vielzahl von Speichersystemen bereit, d.h. dieses Vorrichtungselement ist in geringerer Anzahl (evtl. nur eines) im Netz vorhanden. Auf diese Weise werden die Funktionen des Informationsausgabengestaltungssystems, z.B. die Lizenzen zur Sprach- oder Videokodierung, effizient genutzt. In dem Informationsausgabensystem erzeugte vorkodierte Informationsfragmente bzw. Bildungsvorschriften werden dann zu dem Speichersystem bzw. zu einer Vielzahl von Speichersystemen transferiert, so dass sie für die Verwendung bei Informationsausgaben zur Verfügung stehen. Dieses Informationsausgabengestaltungssystem bzw. Informationsausgabengestaltungsmodul besitzt die Funktion der Generierung von Bestandteilen nach den Bedürfnissen des Netzbetreibers und dessen Kunden, also eine Tooling-Funktion im Hinblick auf das Informationsausgabesystem. Es ist dann ein System mit einer dreischichtigen Systemarchitektur gegeben, welches mindestens ein Informationsausgabesystem, mindestens ein Speichersystem und mindestens ein Informationsausgabengestaltungssystem umfasst. Durch eine zentralisierte Erzeugung von vorkodierten Informationsfragmenten und den Transfer der Fragmente bzw. evtl. erzeugter Bildungsregeln zu einem Speichersystem oder einer Vielzahl von Speichersystemen und die Bereitstellung dort für den Zugriff durch Informationsausgabesysteme wird der Bearbeitungsaufwand zur Bereitstellung von Informationsfragmenten bzw. Bildungsregeln für Informationsausgabeanforderungen minimiert, so dass die Anzahl der parallel bearbeitbaren Anforderungen optimal wird. Der Transfer von Informationsfragmenten bzw. Bildungsvorschriften vom Informationsausgabengestaltungssystem zu dem mindestens einen Speichersystem kann beispielsweise mit Hilfe des FTP (File Transfer Protokolls) vorgenommen werden.

Das Informationsausgabesystem ist vorzugsweise eine General Purpose Maschine mit kommerzieller Hardware und offener Betriebssystemschnittstelle, wie sie beispielsweise in Soft Switch Szenarien im Einsatz sind. Neben der Informationsausgabefunktionalität können dann weitere Funktionen auf dieser Hardware bereitgestellt werden. Beispielsweise können das Informationsausgabesystem und das Speichersystem auf demselben Hardwareelement realisiert werden, z.B. für sehr kleine Anwendungen und Feldversuche des Netzbetreibers vor Breiteneinführung neuer IP-basierter Technik.

Der Erfindungsgegenstand beinhaltet auch eine Vorrichtung, welche ein Informationsausgabesystem umfasst, das mit Mitteln zur Durchführung des erfindungsgemäßen Verfahrens, d.h. mit Mitteln zum Abrufen von vorkodierten Informationsfragmenten bzw. Bildungsvorschriften, versehen ist. Ebenso ist eine Vorrichtung mit einem Speichersystem umfasst, wobei das Speichersystem über Mittel für die Speicherung von vorkodierten Informationsfragmenten bzw. Bildungsvorschriften sowie Mittel zur Übertragung von im Rahmen der Bearbeitung einer Informationsausgabe angeforderten vorkodierten Informationsfragmenten bzw. Bildungsvorschriften verfügt. Schließlich ist eine Vorrichtung mit einem Informationsausgabengestaltungssystem mit Mitteln zur Generierung von vorkodierten Informationsfragmenten bzw. Bildungsvorschriften sowie zur Übertragung dieser vorkodierten Informationsfragmente bzw. Bildungsvorschriften an Speichersysteme auch Teil des Erfindungsgegenstands.

Der Erfindungsgegenstand wird im Folgenden im Rahmen eines Ausführungsbeispieles anhand von Figuren näher erläutert. Es zeigen:
- Fig. 1: Ein System mit Vorrichtungselementen für eine erfindungsgemäße Informationsausgabe.
- Fig. 2: Eine Abfolge von Schritten für eine erfindungsgemäße Informationsausgabe.

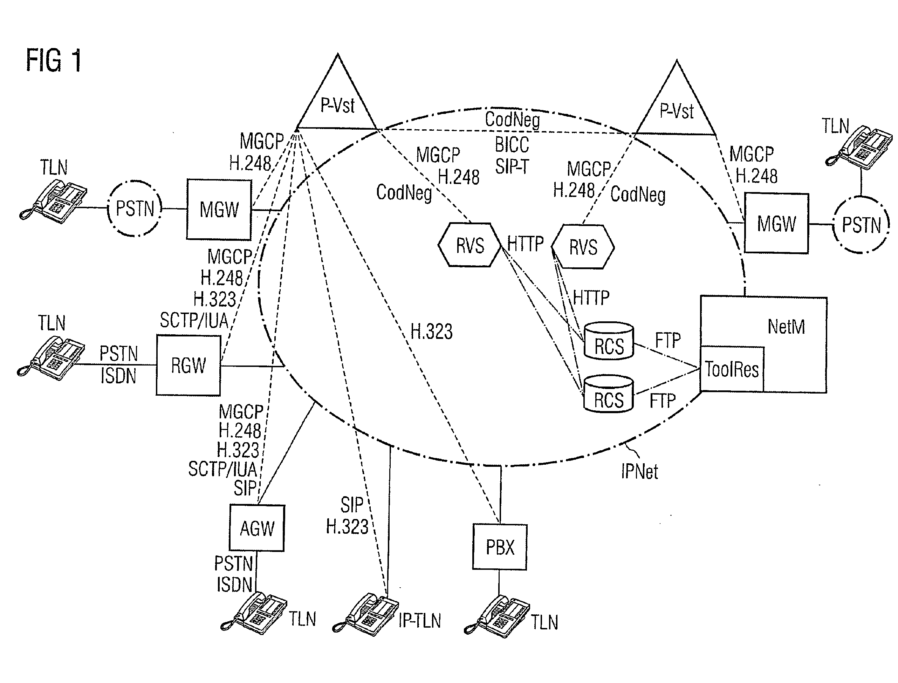

Im Zentrum von Fig. 1 ist ein paketbasiertes Netz IPNet gezeigt. Es sind verschiedene Zugangsmöglichkeiten von Teilnehmern bzw. Endgeräten TLN mit Hilfe von Zugangseinrichtungen dargestellt. Analoge (PSTN) oder ISDN-Teilnehmer sind beispielsweise über ein Media-Gateway MGW (Steuerungsprotokoll z.B. MGCP oder H.248), direkt über ein Residential Gateway RGW (Steuerungsprotokoll z.B. MGCP, H.248, H.323 oder SCTP/IUA) oder ein Access Gateway AGW (Steuerungsprotokoll z.B. MGCP, H.248, H.323, SCTP/IUA oder SIP) angebunden. Nicht in der Figur dargestellt sind von dem PSTN Netz bzw. dem ISDN Netz an die paketbasierten Vermittlungsstellen übermittelte SS#7 (Signalling System No. 7) Signalisierungsnachrichten. Andere Möglichkeiten sind Teilnehmer, die über ein IP-Telefon IP-TLN, welches mit Hilfe des SIP (Session Initiation Protocol) Protokolls oder des H.323-Prookolls mit der als SIP-Proxy oder H.323 Gatekeeper agierenden paketbasierten Vermittlungsstelle kommunizieren und auf das paketorientierte Netz IPNet zugreifen, sowie Teilnehmer, die über eine Nebenstellenanlage PBX (Private Branch Exchange) mit paketbasierter Signalisierung (z.B. SIP, H.323) an das paketorientierte Netz IPNet angeschlossen sind. Die Zugangsvorrichtungen Media Gateway MGW, Residential Gateway RGW, und Access Gateway AGW, genauso wie auch die Nebenstelle PBX werden von einer paketorientierten Vermittlungsstelle P-Vst gesteuert bzw. bedient. Dabei verwendete Protokolle sind z.B. das MGCP-Protokoll, das H.248-Protokoll, das H.323-Protokoll, das SCTP/IUA-Protokoll (SCTP: stream control transmission protocol; verwendet für den transparenten Transport von ISDN-Signalisierung) oder das SIP-Protokoll (SIP: session initiation protocol). Die paketorientierte Vermittlungsstelle P-Vst kommuniziert mit Hilfe des BICC-Protokolls (BICC: Bearer Independent Call Control) oder des SIP-T-Protokolls mit anderen paketorientierten Vermittlungsstellen P-Vst. Für die Festlegung eines Kodierverfahrens für Sprachausgabe, welche durch jeden neuen Verbindungswunsch erforderlich wird, wird vom Teilnehmer TLN oder dem vorgelagerten Gateway MGW, RGW oder AGW bzw. Nebenstellenanlage PBX an die die Informationsausgabeeinrichtungen steuernde paketorientierte Vermittlungsstelle P-Vst eine Prioritätsliste der unterstützten Kodierverfahren übertragen, was zur Bestimmung bzw. Festlegung des zu verwendenden Kodierverfahrens führt. Man spricht hier von Codec Negotiation CodNeg. Hierbei kann die genannte Prioritätsliste auch nur ein einziges Kodierverfahren enthalten. Es sind weiter - durch eine paketorientierte Vermittlungsstelle P-VST mit Hilfe des MGCP-Protokolls oder des H.248 Protokolls gesteuert - zwei Sprachausgabesysteme RVS (RVS: für Resource Voice System) dargestellt. Diese beiden Informationsausgabesysteme haben jeweils Zugriff auf zwei Speichersysteme RCS (RCS: für Resource Content System) mit Hilfe des HTTP-Protokolls. Die Speichersysteme RCS werden von einem Informationsausgabengestaltungssystem ToolRes (ToolRes: für tooling resources) mit Hilfe des FTP-Protokolls (FTP: file transfer protocol) mit Informationsfragmenten und Bildungsregeln gespeist. Das Informationsausgabengestaltungssystem ist beim Netzmanagement NetM lokalisiert. Das Speichersystem RCS und das Informationsausgabesystem RVS sind aus Sicherheitsgründen z. B. an getrennten Lokalisationen gedoppelt.

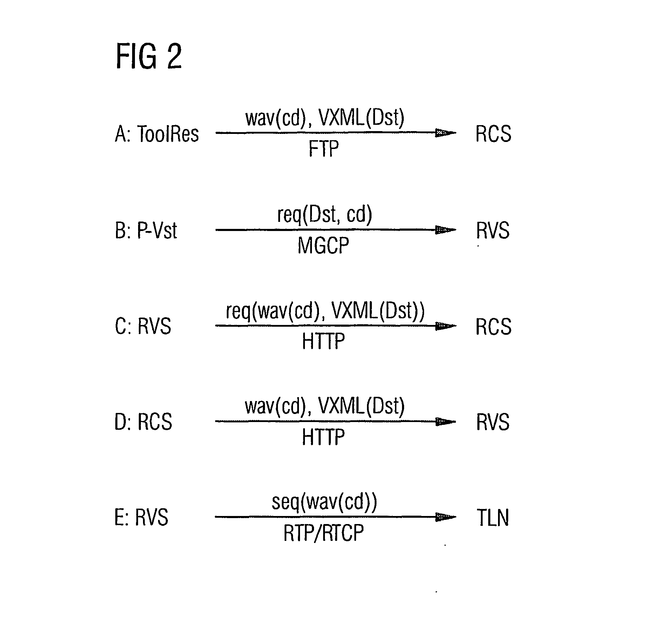

In Fig. 2 sind die Abläufe bei einer Sprachausgabe als Reaktion einer Anforderung für eine Sprachausgabe genauer dargestellt. Als erster Schritt (Schritt A) werden von dem Sprachausgabengestaltungssystem ToolRes Sprachfragmente wav(cd) und Bildungsvorschriften VXML(DST) erzeugt und zu dem Speichersystem RCS transferiert. Der Transfer dieser Files wird mit Hilfe des FTP-Protokolls FTP bewerkstelligt. Dieser Transfer erfolgt i.a. bei Systeminbetriebnahme sowie vollständig oder partiell im Falle von Aktualisierungen von Sprachausgaben oder Bildungsregeln. Die Sprachfragmente sind entsprechend eines Kodierverfahrens cd kodiert. Es ist sinnvoll, Sprachfragmente in verschiedenen Kodierungen vorzuhalten, um Dienste auch für Endgeräte anbieten zu können, die nur bestimmte Kodierverfahren unterstützen. Vorzugsweise werden möglichst alle im Netz unterstützten Kodierverfahren benutzt und die Sprachfragmente in entsprechender Kodierung erzeugt und in die Speichersysteme geladen. Die transferierten Bildungsvorschriften VXML(Dst) bestehen beispielsweise aus in der Programmiersprache VoiceXML geschriebenen Files (in der Figur mit VXML abgekürzt), wobei Bildungsvorschriften VXML(Dst) für eine Menge verschiedener unterstützter Dienste Dst und in Abhängigkeit zu weiteren spezifischen Parametern bereitgestellt werden. Das heißt, die Bildungsregeln werden entsprechend dem zugehörigen Dienst Dst und den weiteren dynamischen Parametern referenziert. Die bei dem Speichersystem RSC abgelegten Sprachfragmente wav(CD) (Die Abkürzung wav wurde im Hinblick auf sogenannte Waves Dateien gewählt, die die Extension .wav haben und Abtastwerte von Sprache oder Tönen beinhalten.) stehen dann für die Bildung von Sprachausgaben bereit. Bei einer Anforderung für eine Sprachausgabe, beispielsweise einer Ansage einer Telefonnummer oder einer Information über die Nichterreichbarkeit eines Teilnehmers wird die paketorientierte Vermittlungsstelle P-Vst, welche das Sprachausgabesystem RVS steuert, über die entsprechende Anforderung informiert oder erkennt selbst die Notwendigkeit der Sprachausgabe aus den vermittlungstechnischen Abläufen. Die paketorientierte Vermittlungsstelle P-VST weist mit Hilfe des MGCP-Protokolls oder eines anderen geeigneten paketbasierten Protokolls (z. B. auch H.248/MEGACO) das Sprachausgabesystem an, die gewünschte Sprachausgabe vorzunehmen. Das geschieht mit Hilfe einer Anforderungsnachricht req(Dst,cd) (req steht für Request), welche als Parameter den verlangten Dienst Dst, d.h. die zu spielende Ansage, und die Liste der bevorzugt zu verwendenden Kodierverfahren cd, welche im Rahmen der Codec Negotiation erforderlich ist, beinhaltet (Schritt B). Weitere Parameter, die Art und Inhalt der Sprachausgabe bestimmen, können mit Hilfe dieser Nachricht übergeben werden. Anforderung von Ansagen und Verbindungsaufbau des Nutzdatenstroms inklusive Anforderung des mindestens einen Kodierverfahrens werden normalerweise in getrennten MGCP-Nachrichten übertragen. Das Sprachausgabesystem identifiziert aufgrund der übergebenen Parameter die für die Sprachausgabe benötigten Elemente, welche sie bei dem Speichersystem für die Sprachausgabe anfordern muss. Es ist möglich, dass Sprachausgaben-Bestandteile bzw. Bildungsvorschriften bereits bei dem Sprachausgabensystem RVS vorhanden sind, z.B., weil sie für einen früheren Dienst benutzt wurden und im Zuge des früheren Dienstes bereits von dem Speichersystem RCS angefordert wurden. Im vorliegenden Fall fordert das Sprachausgabensystem mit einer Nachricht req(wav(cd),VXML(Dst)) (req steht wieder für Request) mit dem Kodierverfahren cd kodierte Sprachfragmente wav(cd) und/oder eine Bildungsvorschrift VXML(Dst) von dem Speichersystem RCS mit Hilfe des HTTP-Protokolls an (Schritt C). Die Bildungsvorschrift VXML(Dst) kann von weiteren mittels der Anforderungsnachricht req(Dst,cd) übergebenen Parametern abhängig sein. Die anforderten Sprachfragmente wav(cd) bzw. die angeforderte Bildungsvorschrift VXML(Dst) wird daraufhin von dem Speichersystem RCS zu dem Sprachausgabesystem RVS wieder mit Hilfe des HTTP-Protokolls übertragen (Schritt D). Schritt C und Schritt D können mehrmals für die Bearbeitung des verlangten Dienstes Dst durchlaufen werden. Das Sprachausgabesystem RVS bildet daraufhin mit Hilfe der Bildungsvorschrift VXML(Dst) die entsprechend Dienst Dst und u. U. weiteren Parametern angeforderte Sprachausgabeseq(wav(cd)) (seq steht hierbei für sequence), welche aus einer Folge von konkatenierten bzw. zusammengefügten Sprachfragmenten wav(CD), die mit dem bei der Codec Negotiation bestimmten Kodierverfahren cd kodiert sind, besteht (Schritt E). Wird aus der Bildungsvorschrift erkannt, dass zusätzlich zu den lokal gespeicherten Sprachfragmenten weitere wegen Haltbarkeitsablauf nicht mehr verfügbare oder noch nicht benötigte Sprachfragmente bestimmter Kodierung wav(cd) notwendig sind, werden diese in gleicher Weise von einem Speichersystem angefordert. Bei Standardansagen sind jedoch i.a. nach einiger Zeit sowohl die Bildungsregeln als auch die benötigten Sprachfragmente in jeder unterstützten Kodierung lokal im RVS verfügbar, so dass eine Anforderung der Speichersysteme gänzlich entfallen kann, sofern nicht der seltene Fall des Erschöpfens der Gültigkeit der Bildungsregel oder eines Sprachfragments der gewünschten Kodierung auftritt. Diese Sprachausgabe seq(wav(cd)) wird dann von dem Sprachausgabesystem RVS als Nutzdaten über das paketorientierte Netz zu dem Endgerät bzw. Teilnehmer TLN übertragen. Die Übertragung von den Sprachinformationen über das paketorientierte Netz geschieht beispielsweise mittels des RTP- inklusive des RTCP-Protokolls.

## Patentansprüche

1. Verfahren zur Erzeugung einer über ein paketorientiertes Netz (IPNet) zu übertragenden Informationsausgabe (seq(wav(cd)))
bei dem
- einem Informationsausgabesystem (RVS) eine Anforderung (req(Dst,cd)) für eine Informationsausgabe (seq(wav(cd))) signalisiert wird,
- eine Information (cd) über mindestens ein bei der Informationsausgabe verwendbares Kodierverfahren an das Informationsausgabesystem (RVS) übermittelt wird,
- für die Informationsausgabe auf ein Speichersystem (RCS) mit vorkodierten Informationsausgabenbestandteilen (wav(cd)) zugegriffen wird, wobei das bei der Informationsausgabe zu verwendende Kodierverfahren von dem Informationsausgabesystem (RVS) dem Speichersystem (RCS) mitgeteilt wird,
- von dem Speichersystem (RCS) zumindest ein mit dem zu verwendenden Kodierverfahren vorkodierter Informationsausgabenbestandteil (wav(cd)) an das Informationsausgabesystem (RVS) übertragen wird, und
- eine Informationsausgabe (seq(wav(cd))) mit dem mindestens einem übertragenen Informationsausgabenbestandteil (wav(cd)) gebildet wird.

2. Verfahren nach Anspruch 1,
**dadurch gekennzeichnet,**
- **dass** die Informationsausgabe Audio-Informationen umfasst.

3. Verfahren nach Anspruch 2,
**dadurch gekennzeichnet,**
- **dass** die Informationsausgabe Sprachinformationen umfasst.

4. Verfahren nach Anspruch 1,
**dadurch gekennzeichnet,**
- **dass** die Informationsausgabe Video-Informationen umfasst.

5. Verfahren nach einem der vorhergehenden Ansprüche,
**dadurch gekennzeichnet,**
- **dass** zur Anforderung der Informationsausgabe ein standardisiertes Signalisierungsprotokoll verwendet wird.

6. Verfahren nach Anspruch 5,
**dadurch gekennzeichnet,**
- **dass** das Signalisierungsprotokoll MGCP oder H.248/MEGACO ist.

7. Verfahren nach einem der vorhergehenden Ansprüche,
**dadurch gekennzeichnet,**
- **dass** Bildungsvorschriften (VXML(Dst)) von dem Speichersystem (RCS) an das Informationsausgabesystem (RVS) übertragen werden, und
- **dass** die Informationsausgabe (seq(wav(cd))) nach Maßgabe der Bildungsvorschrift (VXML(Dst)) aus vorkodierten Informationsausgabenbestandteilen (wav(cd)) gebildet wird.

8. Verfahren nach einem der vorhergehenden Ansprüche,
**dadurch gekennzeichnet,**
- **dass** von dem Speichersystem (RCS) an das Informationsausgabesystem (RVS) übertragene vorkodierte Informationsausgabenbestandteil (wav(cd)) dort für weitere Verwendung abgespeichert werden.

9. Verfahren nach Anspruch 8,
**dadurch gekennzeichnet,**
- **dass** die Speicherung abhängig von dem zu speichernden Bestandteil zeitlich begrenzt erfolgt.

10. Verfahren nach einem der vorhergehenden Ansprüche,
**dadurch gekennzeichnet,**
- **dass** von dem Speichersystem (RCS) an das Informationsausgabesystem (RVS) übertragene Bildungsvorschriften (VXML(Dst)) dort für weitere Verwendung abgespeichert werden.

11. Verfahren nach Anspruch 9,
**dadurch gekennzeichnet,**
- **dass** die Speicherung abhängig von der zu speichernden Bildungsvorschrift zeitlich begrenzt erfolgt.

12. Verfahren nach einem der vorhergehenden Ansprüche,
**dadurch gekennzeichnet,**
- **dass** von dem Speichersystem (RCS) an das Informationsausgabesystem (RVS) übertragene vorkodierte Informationsausgabenbestandteile (wav(cd)) und Bildungsvorschriften (VXML(Dst)) in dem Informationsausgabesystem (RVS) gespeichert werden, und
- **dass** bei einer Anforderung (req(Dst,cd)) für eine Informationsausgabe (seq(wav(cd))) zur Bildung der Informationsausgabe (seq(wav(cd))) ein in dem Informationsausgabesystem (RVS) gespeicherter Informationsausgabenbestandteil (wav(cd)) bzw. eine in dem Informationsausgabensystem gespeicherte Bildungsvorschrift (VXML(Dst)) verwendet werden.

13. Verfahren nach einem der vorhergehenden Ansprüche,
**dadurch gekennzeichnet,**
- **dass** ein Informationsausgabengestaltungssystem (ToolRes) gegeben ist,
- **dass** vorkodierte Informationsausgabenbestandteile (wav(cd)) in dem Informationsausgabengestaltungssystem (ToolRes) erzeugt werden, und
- **dass** in dem Informationsausgabengestaltungssystem (ToolRes) erzeugte vorkodierte Informationsausgabenbestandteile (wav(cd)) zu dem Speichersystem (RCS) transferiert werden.

14. Verfahren nach einem der vorhergehenden Ansprüche 7 bis 13,
**dadurch gekennzeichnet,**
- **dass** ein Informationsausgabengestaltungssystem (ToolRes) gegeben ist,
- **dass** Bildungsvorschriften (VXML(Dst)) in dem Informationsausgabengestaltungssystem (ToolRes) erzeugt werden, und
- **dass** in dem Informationsausgabengestaltungssystem (ToolRes) erzeugte Bildungsvorschriften (VXML(Dst)) zu dem Speichersystem (RCS) transferiert werden.

15. Verfahren nach einem der vorhergehenden Ansprüche,
**dadurch gekennzeichnet,**
- **dass** vorkodierte Informationsausgabenbestandteile (wav(cd)) in dem Speichersystem (RCS) erzeugt werden.

16. Verfahren nach einem der vorhergehenden Ansprüche,
**dadurch gekennzeichnet,**
- **dass** Bildungsvorschriften (VXML(Dst)) in dem Speichersystem (RCS) erzeugt werden.

17. Verfahren nach einem der vorhergehenden Ansprüche,
**dadurch gekennzeichnet,**
- **dass** die Informationsausgabe (seq(wav(cd))) auch mit während der Bearbeitung der Anforderung (req(Dst,cd)) erzeugten Informationsausgabenbestandteilen (wav(cd)) gebildet wird.

18. Vorrichtung zur Erzeugung einer über ein paketorientiertes Netz zu übertragender Informationsausgabe (seq(wav(cd)))
- mit einem Informationsausgabesystem (RVS) zur Bildung von Informationsausgaben (seq(wav(cd))) mittels vorkodierter Informationsausgabenbestandteilen (wav(cd)),
- mit einem Speichersystem (RCS) zur Speicherung von vorkodierten Informationsausgabenbestandteilen (wav(cd)), wobei
- über eine genormten Schnittstelle vorkodierte Informationsausgabenbestandteile (wav(cd)) zwischen dem Informationsausgabesystem (RVS) und dem Speichersystem (RCS) übertragbar sind.

19. Vorrichtung nach Anspruch 18,
**dadurch gekennzeichnet,**
- **dass** die Vorrichtung ein Informationsausgabengestaltungssystem (ToolRes) zur Erzeugung von vorkodierten Informationsausgabenbestandteilen (wav(cd)) aufweist, und über eine genormte Schnittstelle zwischen dem Informationsausgabengestaltungssystem (ToolRes) und dem Speichersystem (RCS) vorkodierte Informationsausgabenbestandteile (wav(cd)) übertragbar sind.

20. Vorrichtung nach Anspruch 18 oder 19,
**dadurch gekennzeichnet,**
- **dass** in dem Informationsausgabengestaltungssystem (ToolRes) oder dem Speichersystem (RCS) Bildungsvorschriften (VXML(Dst)) für die Bildung von Informationsausgaben (seq(wav(cd))) erzeugbar sind und zu dem Informationsausgabensystem (RVS) übertragbar sind.

21. Vorrichtung nach einem der Ansprüche 18-20,
- mit einer Mehrzahl von Informationsausgabensystemen und mindestens zwei Speichersystemen, wobei jedes Informationsausgabensystem auf mindestens zwei Speichersysteme Zugriff besitzt.

22. Vorrichtung nach einem der Ansprüche 18-21,
- mit mindestens einem Informationsausgabengestaltungssystem, das auf eine Mehrzahl von Speichersysteme Zugriff hat.

## Claims

1. Method for generating an information output (seq(wav(cd))) to be transmitted over a packet-oriented network (IPNet) in which
- a requirement (req(Dst,cd)) for an information output (seq(wav(cd))) is signalled to an information output system (RVS),
- information (cd) about at least one coding method which can be used for information output is transmitted to the information output system (RVS),
- for information output a memory system (RCS) with precoded information output components (wav(cd)) is accessed, with the coding method to be used for the information output being notified to the memory system (RCS) by the information output system (RVS),
- at least one precoded information output component (wav(cd)) precoded with the coding method to be used is transmitted by the memory system (RCS) to the information output system (RVS), and
- an information output (seq(wav(cd))) is formed with the at least one transmitted information output component (wav(cd)).

2. Method in accordance with claim 1,
**characterized in that**
- the information output comprises audio information..

3. Method in accordance with claim 2,
**characterized in that**
- the information output comprises voice information.

4. Method in accordance with claim 1,
**characterized in that**
- the information output comprises video information.

5. Method in accordance with one of the previous claims,
**characterized in that**,
- to request the information output a standardized signalling protocol is used.

6. Method in accordance with claim 5,
**characterized in that**
- the signalling protocol is MGCP or H.248/MEGACO.

7. Method in accordance with one of the previous claims,
**characterized in that**,
- creation rules (VXML(Dst)) are transmitted by the memory system (RCS) to the information output system (RVS), and
- the information output (seq(wav(cd))) is formed in accordance with the creation specification (VXML(Dst)) from precoded information output components (wav(cd)).

8. Method in accordance with one of the previous claims,
**characterized in that**,
- the precoded information output component (wav(cd)) transmitted by the memory system (RCS) to the information output system (RVS) is stored there for further use.

9. Method in accordance with claim 8, **characterized in that**,
- the storage is undertaken for a limited time depending on the component to be stored.

10. Method in accordance with one of the previous claims,
**characterized in that**,
- creation specifications (VXML(Dst)) transmitted from the memory system (RCS) to the information output system (RVS) are stored there for further use.

11. Method in accordance with claim 9,
**characterized in that**
- the storage is undertaken for a limited time depending on the creation specification to be stored.

12. Method in accordance with one of the previous claims.
**characterized in that**
- precoded information output components (wav(cd)) and creation specifications (VXML(Dst)) transmitted from the memory system (RCS) to the information output system (RVS) are stored in the information output system (RVS), and - on a request (req(Dst,cd)) for an information output (seq(wav(cd))), to form the information output (seq (wav (cd))) an information output component (wav(cd)) stored in the information output system (RVS) or a creation specification (VXML(Dst)) stored in the information output system is used.

13. Method in accordance with one of the previous claims,
**characterized in that**,
- an information output design system (ToolRes) is specified,
- precoded information output components (wav(cd)) are generated in the information output design system (ToolRes), and
- precoded information output components (wav(cd)) generated in the information output design system (ToolRes) are transferred to the memory system (RCS).

14. Method in accordance with one of the previous claims 7 to 13,
**characterized in that**
- an information output design system (ToolRes) is specified,
- creation specifications (VXML(Dst)) are generated in the information output design system (ToolRes), and
- creation specifications (VXML (DST)) generated in the information output design system (ToolRes) are transferred to the memory system (RCS).

15. Method in accordance with one of the previous claims,
**characterized in that**,
- precoded information output components (wav(cd)) are generated in the memory system (RCS).

16. Method in accordance with one of the previous claims,
**characterized in that**,
- creation specifications (VXML(Dst)) are generated in the memory system (RCS).

17. Method in accordance with one of the previous claims,
**characterized in that**,
- the information output (seq(wav(cd))) is also formed with information output components (wav(cd)) generated during the processing of the requirements (req(Dst,cd)).

18. Device for generating an information output (seq(wav(cd))) to be transmitted over a packet-oriented network
- with an information output system (RVS) for forming of information outputs (seq(wav(cd))) by means of precoded information output components (wav(cd)),
- with a memory system (RCS) for storing precoded information output components (wav(cd)), whereby
- precoded information output components (wav(cd)) can be transferred via a standardized interface between the information output system (RVS) and the memory system (RCS).

19. Device in accordance with Claim 18,
**characterized in that**
- the device features an information output design system (ToolRes) for creating precoded information output components (wav(cd)), and precoded information output components (wav(cd)) are transmitted via a standardized interface between the information output design system (ToolRes) and the memory system (RCS).

20. Device in accordance with claim 18 or 19, **characterized in that**,
- in the information output design system (ToolRes) or the memory system (RCS) creation specifications (VXML(Dst)) for the formation of information outputs (seq(wav(cd))) can be generated and can be transmitted to the information output system (RVS).

21. Device in accordance with one of the claims 18-20,
- with a plurality of information output systems and at least two memory systems, with each information output system having access to at least two memory systems.

22. Device in accordance with one of the claims 18-21,
- with at least one information output design system which has access to a plurality of memory systems.

## Revendications

1. Procédé pour générer une sortie d'information (seq(wav(cd))) à transmettre via un réseau orienté paquets (IPNet), dans lequel
- une requête (req(Dst, cd)) de sortie d'informations (seq(wav(cd))) est signalée à un système de sortie d'informations (RVS),
- une information (cd) est transmise au système de sortie d'informations (RVS) par l'intermédiaire d'au moins un procédé de codage utilisable lors de la sortie d'informations,
- pour la sortie d'informations, il est accédé à un système de mémoire (RCS) avec des éléments précodés de sortie d'informations (wav(cd)), le procédé de codage à utiliser lors de la sortie d'informations étant communiqué par le système de sortie d'informations (RVS) au système de mémoire (RCS),
- au moins un élément de sortie d'information (wav(cd)) précodé avec le procédé de codage à utiliser est transmis par le système de mémoire (RCS) au système de sortie d'informations (RVS) et
- une sortie d'informations (seq(wav(cd))) est constituée avec l'au moins un élément de sortie d'informations (wav(cd)) transmis.

2. Procédé selon la revendication 1, **caractérisé en ce que** la sortie d'informations comprend des informations audio.

3. Procédé selon la revendication 2, **caractérisé en ce que** la sortie d'informations comprend des informations vocales.

4. Procédé selon la revendication 1, **caractérisé en ce que** la sortie d'informations comprend des informations vidéo.

5. Procédé selon l'une des revendications précédentes, **caractérisé par** l'utilisation d'un protocole de signalisation standardisé aux fins de la requête de sortie d'informations.

6. Procédé selon la revendication 5, **caractérisé en c**e que le protocole de signalisation est le MGCP ou le H.248/MEGACO.

7. Procédé selon l'une des revendications précédentes, **caractérisé en ce que** des règles de constitution (VXML(Dst)) sont transmises du système de mémoire (RCS) au système de sortie d'informations (RVS) et **en ce que** la sortie d'informations (seq(wav(cd))) est constituée conformément à la règle de constitution (VXML(Dst)) à partir d'éléments précodés de sortie d'informations (wav(cd)).

8. Procédé selon l'une des revendications précédentes, **caractérisé en ce que** des éléments précodés de sortie d'informations (wav(cd)) transmis du système de mémoire (RCS) au système de sortie d'informations (RVS) sont mis en mémoire là-même pour une autre utilisation.

9. Procédé selon la revendication 8, **caractérisé en ce que** la mise en mémoire se fait de manière limitée dans le temps en fonction de l'élément à mettre en mémoire.

10. Procédé selon l'une des revendications précédentes, **caractérisé en ce que** des règles de constitution (VXML(Dst)) transmises du système de mémoire (RCS) au système de sortie d'informations (RVS) sont mises en mémoire là-même pour une autre utilisation.

11. Procédé selon la revendication 9, **caractérisé en ce que** la mise en mémoire se fait de manière limitée dans le temps en fonction de la règle de constitution à mettre en mémoire.

12. Procédé selon l'une des revendications précédentes, **caractérisé en ce que** des éléments précodés de sortie d'informations (wav(cd)) et des règles de constitution (VXML(Dst) transmis du système de mémoire (RCS) au système de sortie d'informations (RVS) sont mis en mémoire dans le système de sortie d'informations (RVS) et **en ce que**, étant donné une requête (req(Dst, cd)) de sortie d'informations (seq(wav(cd))), on utilise, pour constituer la sortie d'informations (seq(wav(cd))), un élément de sortie d'informations (wav(cd)) stocké dans le système de sortie d'informations (RVS) resp. une règle de constitution (VXML(Dst)) stockée dans le système de sortie d'informations.

13. Procédé selon l'une des revendications précédentes,
**caractérisé en ce que**
- il y a un système de configuration de sortie d'informations (ToolRes),
- des éléments précodés de sortie d'informations (wav(cd)) sont générés dans le système de configuration de sortie d'informations (ToolRes) et
- des éléments précodés de sortie d'informations (wav(cd)) générés dans le système de configuration de sortie d'informations (ToolRes) sont transférés vers le système de mémoire (RCS).

14. Procédé selon l'une des revendications précédentes 7 à 13, **caractérisé en ce que**
- il y a un système de configuration de sortie d'informations (ToolRes),
- des règles de constitution (VXML(Dst)) sont générées dans le système de configuration de sortie d'informations (ToolRes) et
- des règles de constitution (VXML(Dst)) générées dans le système de configuration de sortie d'informations (ToolRes) sont transférées vers le système de mémoire (RCS).

15. Procédé selon l'une des revendications précédentes, **caractérisé en ce que** des éléments précodés de sortie d'informations (wav(cd)) sont générés dans le système de mémoire (RCS).

16. Procédé selon l'une des revendications précédentes, **caractérisé en ce que** des règles de constitution (VXML(Dst)) sont générées dans le système de mémoire (RCS).

17. Procédé selon l'une des revendications précédentes, **caractérisé en ce que** la sortie d'informations (seq(wav(cd))) est également constituée avec des éléments de sortie d'informations (wav(cd)) générés pendant le traitement de la requête (req(Dst, cd)).

18. Dispositif pour générer une sortie d'informations (seq(wav(cd))) à transmettre via un réseau orienté paquets,
- avec un système de sortie d'informations (RVS) pour constituer des sorties d'informations (seq(wav(cd))) au moyen d'éléments précodés de sortie d'informations (wav(cd)),
- avec un système de mémoire (RCS) pour mettre en mémoire des d'éléments précodés de sortie d'informations (wav(cd)),
- des éléments précodés de sortie d'informations (wav(cd)) pouvant être transmis entre le système de sortie d'informations (RVS) et le système de mémoire (RCS) via une interface normalisée.

19. Dispositif selon la revendication 18, **caractérisé en ce que** le dispositif comporte un système de configuration de sortie d'informations (ToolRes) pour générer des éléments précodés de sortie d'informations (wav(cd)) et des éléments précodés de sortie d'informations (wav(cd)) peuvent être transmis entre le système de configuration de sortie d'informations (ToolRes) et le système de mémoire (RCS) via une interface normalisée.

20. Dispositif selon la revendication 18 ou 19, **caractérisé en ce que**, dans le système de configuration de sortie d'informations (ToolRes) ou le système de mémoire (RCS), des règles de constitution (VXML(Dst) peuvent être générées pour constituer des sorties d'informations (seq(wav(cd))) et peuvent être transmises au système de sortie d'informations (RVS).

21. Dispositif selon l'une des revendications 18 à 20, comprenant une pluralité de systèmes de sortie d'informations et au moins deux systèmes de mémoire, chaque système de sortie d'informations ayant accès à au moins deux systèmes de mémoire.

22. Dispositif selon l'une des revendications 18 à 21, comprenant au moins un système de configuration de sortie d'informations qui a accès à une pluralité de systèmes de mémoire.
